(19) Europäisches Patentamt
European Patent Office
Office européen des brevets

(11) **EP 3 959 283 B1**

(12) **FASCICULE DE BREVET EUROPEEN**


(45) Date de publication et mention de la délivrance du brevet:
**22.10.2025 Bulletin 2025/43**

(21) Numéro de dépôt: **20754312.5**

(22) Date de dépôt: **23.04.2020**

(51) Classification Internationale des Brevets (IPC):
***C09J 175/06*** (2006.01) ***C08G 18/10*** (2006.01)
***C08G 18/28*** (2006.01) ***C08G 18/42*** (2006.01)
***C08G 18/72*** (2006.01) ***C08G 18/73*** (2006.01)
***C08G 18/76*** (2006.01) ***C08G 18/79*** (2006.01)
***C08G 18/80*** (2006.01) ***C09D 175/06*** (2006.01)

(52) Classification Coopérative des Brevets (CPC):
**C09J 175/06; C08G 18/10; C08G 18/289; C08G 18/4216; C08G 18/724; C08G 18/73; C08G 18/7642; C08G 18/792; C08G 18/8029; C09D 175/06;** C08G 2190/00

(86) Numéro de dépôt international:
**PCT/FR2020/050690**

(87) Numéro de publication internationale:
**WO 2020/217023 (29.10.2020 Gazette 2020/44)**


(54) **ADHESIF DE LAMINATION POUR STERILISATION**

KASCHIERKLEBSTOFF ZUR STERILISATION

LAMINATION ADHESIVE FOR STERILISATION


(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.04.2019 FR 1904454**

(43) Date de publication de la demande:
**02.03.2022 Bulletin 2022/09**



(73) Titulaire: **Bostik SA**
**92800 Puteaux (FR)**

(72) Inventeurs:
- **PARDAL, Francis**
**60280 VENETTE (FR)**
- **PENET, David**
**60280 VENETTE (FR)**

(74) Mandataire: **Arkema Patent**
**Arkema France**
**DRD-DPI**
**51, Esplanade du Général de Gaulle**
**CS 10478**
**92907 Paris La Défense Cedex (FR)**



(56) Documents cités:
**EP-A1- 1 985 679** **WO-A1-2015/093583**
**WO-A1-2015/095583**


Remarques:
Le dossier contient des informations techniques présentées postérieurement au dépôt de la demande et ne figurant pas dans le présent fascicule.


Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention a pour objet une composition adhésive de type polyuréthane bi composante solvantée, qui est adaptée au complexage (ou lamination) des couches minces de matériaux notamment polymériques et/ou métalliques. Elle concerne également un film multicouche comprenant au moins 2 couches minces desdits matériaux liées entre elle par ladite composition adhésive réticulée. Elle concerne enfin l'utilisation dudit film pour la fabrication d'emballages flexibles de produits agroalimentaires, plus particulièrement destinés à la stérilisation.

Les emballages flexibles (ou souples) destinés, notamment, au conditionnement des produits agroalimentaires, sont généralement constitués de plusieurs couches minces (sous forme de feuilles ou de films) dont l'épaisseur est comprise entre 5 et 150 $\mu$m et qui sont constituées de différents matériaux comme le papier, un métal (par exemple l'aluminium) ou encore par des polymères thermoplastiques. Ces couches minces sont liées par collage, et le film complexe (ou multicouche) correspondant, dont l'épaisseur peut varier de 20 à 400 $\mu$m, permet de combiner les propriétés des différentes couches individuelles de matériau (également qualifiées de "supports") et d'offrir ainsi au consommateur un ensemble de caractéristiques adaptées à l'emballage souple final comme, par exemple:

- son apparence visuelle (notamment celle des éléments imprimés présentant l'information concernant le produit emballé et destinée au consommateur, ou encore sa transparence),
- un effet de barrière à la lumière ou à l'humidité atmosphérique ou aux gaz, notamment à l'oxygène,
- un contact alimentaire sans risques de toxicité ou de modification des propriétés organoleptiques des aliments emballés,
- une résistance chimique pour certains produits tels que le ketchup, et
- une résistance thermique appropriée.

On entend par une telle résistance thermique le maintien de la cohésion du film multicouche lorsqu'il est exposé à des températures élevées, et notamment l'absence de séparation entre les couches minces liées par collage qui le constituent. Une telle séparation est généralement désignée par le terme de "délamination".

Cette résistance thermique est en effet nécessaire lors de la mise en forme du film multicouche pour la fabrication de l'emballage final. Cette mise en forme comprend généralement une étape de thermoscellage, durant laquelle ledit film est soumis pendant quelques secondes à une température comprise entre 120 et 250 °C et à une pression de quelques bars. Cette dernière technique est également utilisée pour la fermeture de l'emballage autour du produit agroalimentaire.

Cette résistance thermique est également requise pour les films multicouches qui sont destinés aux traitements de stérilisation des produits alimentaires conditionnés dans l'emballage. Un tel traitement expose en effet le film multicouche à une température comprise entre 100 et 135°C durant une durée généralement supérieure à celle du thermoscellage, pouvant aller jusqu'à une heure.

Les diverses couches de matériaux qui composent le film multicouche sont combinées ou assemblées par contrecollage, au cours de procédés industriels de complexage (ou encore de "lamination"). Ces procédés mettent en œuvre des adhésifs (ou colles) et des équipements (ou machines) qui sont conçus à cet effet et qui fonctionnent en continu avec des vitesses de ligne généralement très élevées, de l'ordre de plusieurs centaines de mètres par minute. Le film multicouche ainsi obtenu est souvent lui-même désigné par le terme "laminé".

Ces procédés de lamination comprennent tout d'abord une étape d'enduction de l'adhésif sur un premier film de matériau, qui consiste en un dépôt d'une couche de colle continue et d'épaisseur contrôlée généralement inférieure à 10 $\mu$m, correspondant à une quantité de colle (ou grammage) ne dépassant pas en général 10 g/m$^2$. Cette étape d'enduction est suivie d'une étape de contrecollage d'un deuxième film de matériau, identique ou différent du premier, consistant en l'application sous pression de ce deuxième film sur le premier film recouvert de la couche de colle.

Les films complexes sont ainsi finalement obtenus en très grande largeur et sont généralement conditionnés par enroulement, sous forme de larges bobines de 1 m à 1,50 m de diamètre ayant, comme le film qu'elles stockent, jusqu'à 2 m de largeur. Ces larges bobines peuvent être stockées et transportées, en vue de leur utilisation :

- soit directement par les industriels de l'agroalimentaire, en vue du conditionnement de leur produit,
- soit par des transformateurs (ou complexeurs, désignés encore par le terme anglais de "converters").

Dans les 2 cas, on procède à la découpe du film pour en réduire la largeur, et à son façonnage pour fabriquer des sachets, eux-mêmes destinés à l'emballage d'un produit, par exemple d'un produit agroalimentaire.

Les adhésifs de lamination de type polyuréthane bicomposant avec solvant sont largement utilisés comme colle pour la fabrication de systèmes multicouches destinés au domaine de l'emballage flexible. La mise en œuvre desdits adhésifs solvantés dans le procédé de complexage rend nécessaire une étape d'évaporation du solvant organique. Cette étape est effectuée avant l'étape de contrecollage par passage dans un four du premier film recouvert de colle à la suite de l'étape d'enduction.

Les adhésifs de lamination de type polyuréthane bicomposant avec solvant sont fournis au complexeur sous la forme de 2 compositions (ou composants) :

- l'un (appelé composant -NCO) comprenant des entités chimiques porteuses de groupements terminaux isocyanates -NCO, et
- l'autre (appelé composant -OH) comprenant des entités chimiques porteuses de groupements terminaux hydroxyles -OH.

S'agissant d'un adhésif avec solvant, ces 2 compositions sont des solutions organiques de ces entités chimiques.

Le mélange de ces 2 solutions organiques est réalisé à température ambiante par l'opérateur de la machine de complexage préalablement à sa mise en route, ce qui permet le fonctionnement correct de celle-ci, grâce à une viscosité appropriée obtenue le cas échéant par rajout de solvant.

A l'issue de l'étape d'enduction du mélange ainsi obtenu sur la $1^{ère}$ couche mince, et de l'étape de contre collage de la $2^{ème}$ couche, les groupements isocyanate du composant -NCO réagissent avec les groupements hydroxyle du composant -OH, selon une réaction dite de réticulation, pour former un polyuréthane qui se présente sous la forme d'un réseau tridimensionnel à groupes uréthanes, assurant la cohésion du joint adhésif entre les 2 couches minces contrecollées. Les adhésif de lamination de type polyuréthane bicomposant avec solvant sont particulièrement adaptés aux films multicouches qui sont capables de résister aux traitements de stérilisation.

Cette cohésion doit être assurée en partie dès l'étape de contre collage, à un niveau suffisant pour que le film bicouche (ou duplex) constitué des 2 supports soit suffisamment solide pour résister aux contraintes mécaniques notamment de cisaillement appliquées par la machine de complexage. Ces contraintes résultent notamment de la vitesse de défilement très élevée du film bicouche et des multiples cylindres (ou rouleaux) avec lesquels il est en contact, notamment pour son guidage et la régulation de sa tension. La résistance d'un tel film duplex aux dites contraintes est particulièrement critique lorsque ledit film est mis en œuvre dans la machine de complexage en tant que produit intermédiaire pour la fabrication d'un film triplex, par enduction d'une nouvelle couche de colle sur une des faces dudit duplex, puis contre collage d'un $3^{ème}$ film de matériau sur ladite face. De même, la résistance d'un film triplex à ces contraintes mécaniques est également critique lorsque ledit film est mis en œuvre dans la machine de complexage en tant que produit intermédiaire pour la fabrication d'un film quadruplex.

L'aptitude des adhésifs de type PU bicomposant avec solvant à assurer, dès l'étape d'enduction et de contrecollage en vue de la production d'un film duplex, triplex ou quadruplex, cette cohésion initiale est désignée dans le métier par les termes de "collant initial" ou encore de "tack initial".

La durée requise pour achever complètement la réaction de réticulation, et assurer ainsi le niveau de cohésion requis en vue de l'utilisation du film complexe dans la fabrication d'emballages flexibles, est appelée "durée de réticulation". Elle est très importante, de l'ordre en général de 3 à 7 jours, et est obtenue, dans la pratique, par stockage des bobines de film complexe soit à température ambiante, soit à une température supérieure, ce qui entraîne des inconvénients pour l'organisation de la production industrielle des complexeurs, liés à la nécessité de disposer d'espaces de stockage appropriés.

Les films complexes fabriqués selon un tel procédé en utilisant des adhésifs de lamination de type polyuréthane bicomposant avec solvant sont généralement bien adaptés à la fabrication d'emballages flexibles souples résistant à la stérilisation en raison de leur bon niveau de cohésion.

On connaît de tels adhésifs de lamination, notamment par la demande EP 1283232 de MITSUI CHEMICALS, ainsi que EP-A1-1985679 décrivant des adhésifs de lamination pour traitement de stérilisation à hautes températures.

Les entités chimiques présentes dans le composant -OH sont généralement des composés chimiques polymériques ou non, parfois d'origine naturelle (comme l'huile de ricin), et qui incluent généralement des polymères de type polyéther polyol et/ou polyester polyol, de masse molaire souvent comprise entre 400 et 4000 g/mole.

Les entités chimiques présentes dans le composant -NCO sont le plus souvent des composés chimiques polymériques qui sont dénommés prépolymères, puisque ce sont des précurseurs du polyuréthane réticulé final constitutif du joint adhésif. Ces prépolymères à groupes terminaux -NCO sont généralement eux-mêmes des polyuréthanes produits par la réaction de polyaddition d'un excès molaire d'un monomère diisocyanate, en général aromatique tels que le diisocyanate de diphénylméthane (MDI) ou le diisocyanate de toluène (TDI), avec des polyéther polyols et/ou polyester polyols.

Or, pour des raisons qui tiennent à la spécificité de cette réaction de polyaddition et à la présence de l'excès molaire du diisocyanate, il reste dans le composant -NCO ainsi obtenu une certaine quantité de monomère diisocyanate non réagi. Ces quantités résiduelles de monomères aromatiques diisocyanates (dits libres) de faible masse moléculaire sont susceptibles de migrer à travers le film multicouche, après la mise en œuvre de l'adhésif bicomposant, et donc à travers l'emballage flexible final. Ainsi lesdits composés sont susceptibles de former par hydrolyse, au contact de l'eau ou de l'humidité présente notamment dans les aliments emballés, des amines primaires aromatiques (désignées souvent par

les termes anglais de Primary Aromatic Amines ou PAA), lesquelles sont considérées comme très néfastes pour la santé humaine et l'environnement.

La présente invention a pour but de proposer un polyuréthane bicomposant avec solvant, qui peut être mis en œuvre dans un film multicouche sans risque de formation ultérieure d'amines primaires aromatique.

Un autre but de l'invention est de proposer un polyuréthane bicomposant avec solvant qui offre aux industriels du complexage, lors de la fabrication dudit film, un tack (ou collant) initial convenable.

Un autre but de l'invention est de proposer un polyuréthane bicomposant avec solvant qui offre aux industriels du complexage, lors de la fabrication dudit film, une durée de réticulation à température ambiante appropriée, de préférence inférieure ou égale à 5 jours, encore plus préférentiellement inférieure ou égale à 2 jours.

Un autre but de l'invention est de proposer un adhésif de lamination de type polyuréthane bicomposant avec solvant qui conduise, après lamination, et notamment après lamination de supports métalliques ou métallisés, à l'obtention d'un film complexe qui présente les propriétés de cohésion requises.

Un autre but de l'invention est de proposer un polyuréthane bicomposant solvanté conduisant à des films multicouches, notamment des films comprenant un support métallique ou métallisé, dont la cohésion est maintenue après les traitements de stérilisation appliqués sur les emballages par les industriels de l'agroalimentaire.

Il a à présent été trouvé que ces buts peuvent être atteints en totalité ou en partie, par la composition adhésive décrite ci-après.

La présente invention a donc pour objet une composition adhésive bicomposante solvantée de type polyuréthane, comprenant un composant -OH et un composant -NCO tels que :

- le composant -OH est une composition (A) comprenant un prépolymère amorphe qui inclut 2 groupes terminaux -OH, dont la masse molaire moyenne en nombre Mn va de 8000 à 12000 g (correspondant à un IOH allant de 9,4 à 14 mg KOH/g) et qui est choisi parmi:
  - un copolyester (A1) obtenu par une réaction de polycondensation :
    - d'au moins un diol aliphatique (i) ; avec
    - au moins un diacide aromatique (ii) choisi parmi l'acide téréphtalique, l'acide isophtalique, l'acide phtalique et un de leurs dérivés diesters ou anhydride ; et
    - au moins un diacide aliphatique (iii) ou un de ses dérivés diesters ou anhydride ; et
  - un polyuréthane (A2) obtenu par une réaction de polyaddition entre un composé diisocyanate aliphatique (A2.P1) et un copolyester amorphe diol (A2.P2) dont la masse moléculaire moyenne en nombre Mn va de 4000 à 11500 g/mole, ledit copolyester étant obtenu par la réaction de polycondensation telle que définie ci-dessus pour (A1) ; et
- le composant -NCO est une composition (B) comprenant un composé (B1) qui inclut 3 groupes terminaux -NCO, et qui est obtenu par la réaction du diisocyanate de méta-xylylène (m-XDI) avec un triol, ledit composé (B1) étant :
  - ou bien le seul composé compris dans (B) incluant 3 groupes terminaux -NCO;
  - ou bien en mélange avec un autre composé (B2) incluant 3 groupes terminaux - NCO, (B2) étant un isocyanurate (B2-1) d'un diisocyanate aliphatique et la teneur de (B1) dans ledit mélange étant d'au moins 40 % en poids, sur la base du poids total dudit mélange.

La composition adhésive bicomposante solvantée telle que définie ci-dessus permet avantageusement d'obtenir, à l'issue d'une durée de réticulation à température ambiante inférieure ou égale à 2 jours, un film complexe qui est exempt de tout risque de formation ultérieure de PAA néfastes pour la santé humaine. En effet les monomères diisocyanates utilisés le cas échéant dans la préparation des composants -NCO et -OH qui la constituent sont des monomères aliphatiques.

Ladite composition adhésive permet en outre, de façon avantageuse, l'obtention de film duplex qui présente un tack initial supérieur à 2 N/15 mm, permettant la réalisation en ligne d'un film triplex ou quadruplex, sans stockage intermédiaire, respectivement, des films duplex ou triplex.

Enfin, les films complexes obtenus au moyen de ladite composition adhésive présentent d'excellentes propriétés de cohésion, notamment lorsque l'un des supports dudit film est un support métallisé, comme par exemple un film d'Aluminium. Ces propriétés de cohésion sont de plus également excellentes après traitement thermique en vue de stérilisation.

L'obtention de ces propriétés pour le film complexe, s'accompagne d'une mise en œuvre aisée de la composition adhésive bi composante correspondante, qu'il s'agisse d'une introduction facile, au moyen d'une pompe, dans la machine

de complexage des composants - NCO et -OH en raison de leurs propriétés de viscosité, ou qu'il s'agisse encore de la mise en œuvre, dans la machine de complexage elle-même, de la composition résultant du mélange desdits composants, là encore en raison d'un profil de viscosité approprié, pour ladite composition.

**Composition (A) (composant -OH) :**

La composition (A) comprend un prépolymère amorphe incluant 2 groupes terminaux -OH (également dénommé diol), qui peut être linéaire ou ramifié, et est choisi parmi le copolyester (A1) et le polyuréthane (A2).

**Copolyester diol amorphe (A1) :**

Selon un mode de réalisation, le prépolymère amorphe compris dans la composition (A) est le copolyester diol amorphe (A1).

Le copolyester diol amorphe (A1) peut être linéaire ou ramifié et possède une masse molaire moyenne en nombre (également appelée Mn) allant de 8000 à 12000 g/mole, ce qui correspond à un IOH allant de 9,4 à 14 mg KOH/g.

La masse molaire moyenne en nombre Mn est mesurée par chromatographie d'exclusion stérique (ou SEC, acronyme de « Size Exclusion Chromatography » en anglais) qui est également désignée par les termes de chromatographie par perméation de gel (ou par le sigle anglais correspondant GPC). L'étalonnage mis en œuvre est usuellement un étalonnage PEG (PolyEthylèneGlycol) ou PS (PolyStyrène), de préférence PS.

L'indice hydroxyle (noté IOH) du copolyester diol linéaire amorphe (A1), et plus généralement d'un polyol, (noté IOH) représente le nombre de fonctions hydroxyles par gramme de polyol et est exprimé sous la forme du nombre équivalent de milligrammes de potasse (KOH) utilisés dans le dosage des fonctions hydroxyles, déterminé par titrimétrie . selon la norme ISO 14900 :2017. L'IOH est relié à la masse molaire moyenne en nombre Mn par la relation :

$$IOH = (56{,}1 \times 2 \times 1000)/Mn$$

Le copolyester diol amorphe (A1) est obtenu par une réaction de polycondensation :

- d'au moins un diol aliphatique (i), avec
- au moins un diacide aromatique (ii) choisi parmi l'acide téréphtalique, l'acide isophtalique, l'acide phtalique et un de leurs dérivés diesters ou anhydride, ; et
- au moins un diacide aliphatique (iii) ou un de ses dérivés diesters ou anhydride.

Le diol aliphatique (i) peut être linéaire ou ramifié et est choisi dans le groupe constitué de l'éthylène glycol (CAS : 107-21-1), du diéthylène glycol, du triéthylène glycol, du tétraéthylène glycol, du 1,2-propanediol, du dipropylène glycol, du tripropylène glycol, du tétrapropylène glycol, du 1,6-hexanediol, du 3-éthyl-2-méthyl-1,5-pentanediol, du 2-éthyl-3-propyl-1,5-pentanediol, du 2,4-diméthyl-3-éthyl-1,5-pentanediol, du 2-éthyl-4-méthyl-3-propyl-1,5-pentadiol, du 2,3-diéthyl-4-méthyl-1,5-pentanediol, du 3-éthyl-2,2,4-triméthyl-1,5-pentadiol, 2,2-diméthyl-4-éthyl-3-propyl-1,5-pentanediol, 2-méthyl-2-propyl-1,5-pentanediol, du 2,4-diméthyl-3-éthyl-2-propyl-1,5-pentanediol, du 2,3-dipropyl-4-éthyl-2-méthyl-1,5-pentanediol, du 2-butyl-2-éthyl-1,5-pentanediol, du 2-butyl-2,3-diéthyl-4-méthyl-1,5-pentanediol, du 2-butyl-2,4-diéthyl-3-propyl-1,5-pentanediol, du 3-butyl-2-propyl-1,5-pentanediol, du 2-méthyl-1,5-pentanediol (CAS : 42856-62-2), du 3-méthyl-1,5-pentanediol (MPD, CAS : 4457-71-0), du 2,2-diméthyl-1,3-pentanediol (CAS : 2157-31-5), du 2,2-diméthyl-1,5-pentanediol (CAS : 3121-82-2), du 3,3-diméthyl-1,5-pentanediol (CAS : 53120-74-4), du 2,3-diméthyl-1,5-pentanediol (CAS : 81554-20-3), du 2,2-diméthyl-1,3-propanediol (Néopentylglycol - NPG, CAS : 126-30-7), du 2,2-diethyl-1,3-propanediol (CAS : 115-76-4), du 2-méthyl-2-propyl-1,3-propanediol (CAS : 78-26-2), du 2-butyl-2-éthyl-1,3-propanediol (CAS : 115-84-4), du 2-méthyl-1,3-propanediol (CAS : 2163-42-0), du 2-benzyloxy-1,3-propanediol (CAS : 14690-00-7), du 2,2-dibenzyl-1,3-propanediol (CAS : 31952-16-6), du 2,2-dibutyl-1,3-propanediol (CAS : 24765-57-9), du 2,2-diisobutyl-1,3-propanediol, du 2,4-diéthyl-1,5-pentanediol, du 2-éthyl-1,6-hexanediol (CAS : 15208-19-2), du 2,5-diméthyl-1,6-hexanediol (CAS : 49623-11-2), du 5-méthyl-2-(1-methylethyl)-1,3-hexanediol(CAS : 80220-07-1), du 1,4-diméthyl-1,4-butanediol, du 1,5-hexanediol (CAS : 928-40-5), du 3-méthyl-1,6-hexanediol (CAS : 4089-71-8), du 3-tert-butyl-1,6-hexanediol (CAS : 82111-97-5), du 1,3-heptanediol (CAS : 23433-04-7), du 1,2-octanediol (CAS : 1117-86-8), du 1,3-octanediol (CAS : 23433-05-8), du 2,2,7,7-tétraméthyl-1,8-octanediol (CAS : 27143-31-3), du 2-méthyl-1,8-octanediol (CAS : 109359-36-6), du 2,6-diméthyl-1,8-octanediol (CAS : 75656-41-6), du 1,7-octanediol (CAS : 3207-95-2), du 4,4,5,5-tétraméthyl-3,6-dioxa-1,8-octanediol (CAS : 76779-60-7), du 2,2,8,8-tétraméthyl-1,9-Nonanediol (CAS : 85018-58-2), du 1,2-nonanediol (CAS : 42789-13-9), du 2,8-diméthyl-1,9-nonanediol (CAS : 40326-00-9), du 1,5-nonanediol (CAS : 13686-96-9), du 2,9-diméthyl-2,9-dipropyl-1,10-décanediol (CAS : 85018-64-0), du 2,9-dibutyl-2,9-diméthyl-1,10-decanediol (CAS : 85018-65-1), du 2,9-diméthyl-2,9-dipropyl-1,10-décanediol (CAS : 85018-64-0), du 2,9-diéthyl-2,9-diméthyl-1,10-décanediol (CAS : 85018-63-9), du 2,2,9,9-tétraméthyl-1,10-decanediol (CAS : 35449-36-6), du 2-nonyl-1,10-décanediol (CAS : 48074-20-0), du 1,9-décanediol (CAS : 128705-94-2), du 2,2,6,6,10,10-hexaméthyl-4,8-dioxa-1,11-undécanediol (CAS : 112548-49-9), du 1-phényl-1,11-undécanediol (CAS : 109217-58-5), du 2-octyl-1,11-undécanediol (CAS : 48074-21-1), du 2,10-diéthyl-2,10-diméthyl-1,11-undécanediol (CAS : 85018-66-2), du 2,2,10,10-tétramethyl-1,11-undécanediol (CAS : 35449-37-7), du 1-phényl-1,11-undécanediol (CAS : 109217-58-5), du 1,2-undécanediol (CAS : 13006-29-6), du 1,2-dodécanediol (CAS : 1119-87-5), du 2,11-dodécanediol (CAS : 33666-71-6), du 2,11-diéthyl-2,11-diméthyl-1,12-dodécanediol (CAS : 85018-68-4), du 2,11-diméthyl-2,11-dipropyl-1,12-dodécanediol (CAS : 85018-69-5), du 2,11-dibutyl-2,11-diméthyl-1,12-dodécanediol (CAS : 85018-70-8), du 2,2,11,11-tétraméthyl-1,12-dodécanediol (CAS : 5658-47-9), du 1,11-dodécanediol (CAS : 80158-99-2), du 11-méthyl-1,7-dodécanediol (CAS : 62870-49-9), du 1,4-dodécanediol (CAS : 38146-95-1), du 1,3-dodécanediol (CAS : 39516-24-0), du 1,10-dodécanediol (CAS : 39516-27-3), du 2,11-diméthyl-2,11-dodécanediol (CAS : 22092-59-7), du 1,5-dodécanediol (CAS : 20999-41-1), du 6,7-dodécanediol (CAS : 91635-53-9), et du cyclohexanedimethanol.

De préférence, le diol (i) est choisi parmi l'éthylène glycol, le diéthylène glycol, le triméthylène glycol, l'hexaméthylène glycol, le propylène glycol (ou propane-1,2-diol), le propane-1,3-diol, le butanediol (-1,4, -1,3 ou -1,2), le néopentyl glycol, le 2-méthyl-1,3-propane diol, l'hexane diol ou encore le cyclohexanedimethanol.

Selon une variante préférée, le diol (i) est choisi parmi l'éthylène glycol et le diéthylène glycol.

De manière encore plus préférée, on utilise 2 diols (i) constitués, respectivement, par l'éthylène glycol et le diéthylène glycol.

Parmi les dérivés diesters de l'acide téréphtalique, de l'acide isophtalique ou de l'acide phtalique utilisables comme monomères (ii), on peut citer par exemple le diméthyl téréphtalate ou le diméthyl isophtalate. Comme exemple de dérivé anhydride d'un diacide aromatique pour le monomère (ii), on peut citer l'anhydride phtalique.

De préférence, on utilise 2 diacides (ii) constitués, respectivement, par l'acide téréphtalique et l'acide isophtalique.

Le diacide aliphatique (iii) peut être linéaire ou ramifié et est par exemple choisi parmi l'acide adipique, l'acide azélaïque, l'acide sébacique, l'acide cyclohexanedicarboxylique, l'acide dodécanedicarboxylique, l'acide 1,10-décanedicarboxylique et l'acide succinique.

De préférence, l'acide adipique est utilisé comme diacide aliphatique (iii).

L'homme du métier peut déterminer la nature des comonomères (i), (ii) et (iii) et leur quantité relative de manière à obtenir un copolyester diol (A1) dont la masse moléculaire moyenne en nombre Mn est dans le domaine indiqué ci-dessus et qui est de plus amorphe, c'est-à-dire dont l'analyse par calorimétrie différentielle à balayage (en anglais, Differential Scanning Calorimetry ou DSC) montre qu'il ne présente pas de point de fusion.

Selon un mode de réalisation préféré, la masse moléculaire moyenne en nombre Mn du copolyester diol (A1) est comprise dans un domaine allant de 8980 à 11810 g/mole, correspondant à un IOH allant de 9,5 à 12,5 mg KOH/g.

Selon un mode de réalisation préféré, le copolyester diol (A1) est obtenu par polycondensation :

- de 2 diols aliphatiques (i) constitués, respectivement, par l'éthylène glycol et le diéthylène glycol ; avec
- 2 diacides (ii) constitués, respectivement, par l'acide téréphtalique et l'acide isophtalique ; et
- de l'acide adipique en tant que diacide aliphatique (iii).

Lorsque certains parmi les monomères (ii) et éventuellement (iii) sont des dérivés diesters, comme par exemple des dérivés diesters méthyliques ou éthyliques, lesdits monomères sont, dans une 1ère étape, mélangés avec un ou plusieurs monomères diols (i), ledit mélange étant porté à une température pouvant aller jusqu'à 190°C, de manière à réaliser, de préférence en présence d'un catalyseur à base de titane ou de zinc, une réaction de transestérification et éliminer le méthanol ou l'éthanol formé. Dans une 2ème étape, les monomères (ii) et éventuellement (iii) qui sont des diacides sont ajoutés, en mélange avec un ou plusieurs monomères diols (i), le milieu réactionnel étant porté à une température pouvant aller jusqu'à 230°C, de manière à réaliser la réaction d'estérification et éliminer l'eau formée. Enfin, dans une 3ème étape, la pression est abaissée à une valeur inférieure à environ 5 mbar, et le milieu réactionnel est porté à une température plus élevée, jusqu'à une valeur voisine de 250°C, afin d'augmenter la longueur des chaînes des copolyesters pour atteindre un IOH compris dans le domaine indiqué précédemment.

## Polyuréthane diol amorphe (A2) :

Selon un mode de réalisation, le prépolymère amorphe compris dans la composition (A) est le polyuréthane diol amorphe (A2).

Le polyuréthane diol amorphe (A2) peut être linéaire ou ramifié et possède une masse moléculaire moyenne en nombre Mn allant de 8000 à 12000 g/mole. Il est obtenu par une réaction de polyaddition entre un composé diisocyanate aliphatique (A2.P1) et un excès stœchiométrique d'un copolyester amorphe diol (A2.P2), linéaire ou ramifié, dont la masse moléculaire moyenne en nombre Mn va de 4000 à 11500 g/mole et qui est obtenu par la réaction de polycondensation telle

que définie ci-dessus pour (A1).

Le composé diisocyanate aliphatique (A2.P1) est avantageusement choisi parmi le diisocyanate d'isophorone (IPDI), le diisocyanate de méta-xylylène (m-XDI), le diisocyanate de méta-xylylène hydrogéné (m-H6XDI), le diisocyanate de pentaméthylène (PDI) et le diisocyanate d'hexaméthylène (HDI). Ces différents diisocyanates sont largement disponibles au plan commercial. Le diisocyanate de méta-xylylène (m-XDI) est par exemple disponible sous la dénomination TAKENATE® 500 auprès de MITSUI CHEMICALS. .Le diisocyanate de méta-xylylène hydrogéné (m-H6XDI) également dénommé bis(isocyanatomethyl) cyclohexane est par exemple disponible sous la dénomination TAKENATE® 600 auprès de MITSUI CHEMICALS.

Selon une variante préférée, le composé diisocyanate aliphatique (A2.P1) est le diisocyanate d'isophorone (IPDI).

On entend, dans le présent texte, par composé diisocyanate aliphatique un composé hydrocarboné de faible masse molaire (inférieure à 300 g/mol) possédant deux groupes isocyanate, lequel composé est soit non aromatique soit tel que aucun des groupes NCO n'est relié par une liaison covalente à un atome de carbone faisant partie d'un cycle hydrocarboné aromatique tel qu'un groupe phényle. Au sens de cette définition, le m-XDI, de formule :

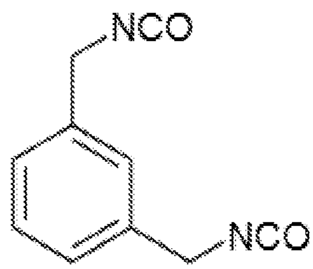

est ainsi un diisocyanate aliphatique.

On entend donc, dans le présent texte, par composé diisocyanate aromatique un composé hydrocarboné de faible masse molaire (inférieure à 300 g/mol) possédant deux groupes isocyanate, lequel composé est aromatique et tel que tous les groupes NCO sont reliés par une liaison covalente à un atome de carbone faisant partie du cycle hydrocarboné aromatique.

Les quantités de composé diisocyanate aliphatique (A2.P1) et de copolyester diol linéaire (A2.P2) mises en œuvre dans la réaction de polyaddition sont telles que le rapport équivalent molaire -NCO/-OH est inférieur ou égal à 0,5, de préférence inférieur ou égal à 0,4, de préférence inférieur ou égal à 0,3, de préférence inférieur ou égal à 0,2, de préférence inférieur ou égal à 0,1. On entend par rapport équivalent molaire -NCO/-OH le rapport du nombre équivalent de groupes -NCO présents dans le composé diisocyanate aliphatique (A2.P1) sur le nombre équivalent de groupes -OH présents dans le copolyester diol amorphe (A2.P2).

La réaction de polyaddition s'effectue généralement à une température comprise entre 70 et 85°C pendant une durée de quelques heures, éventuellement en présence d'un catalyseur.

Le polyuréthane diol amorphe, linéaire ou ramifié, obtenu à l'issue de cette réaction possède une masse moléculaire moyenne en nombre Mn comprise dans un domaine allant de 8000 à 12000 g/mole, de préférence de 8980 à 11810 g/mole.

__**Composition (B) (composant -NCO)**__ :

La composition **(B)** comprend un composé **(B1)** incluant 3 groupes terminaux - NCO, qui est obtenu par la réaction du diisocyanate de méta-xylylène (m-XDI) avec un triol, ledit composé **(B1)** étant :

- ou bien le seul composé compris dans (B) incluant 3 groupes terminaux -NCO;
- ou bien en mélange avec un autre composé **(B2)** incluant 3 groupes terminaux - NCO, (B2) étant un isocyanurate (B2-1) d'un diisocyanate aliphatique et la teneur de (B1) dans ledit mélange étant d'au moins 40 % en poids, sur la base du poids total dudit mélange.

De préférence, ledit composé (B2) est autre que le produit de la réaction du m-XDI avec un triol.

Selon un 1er mode de réalisation, la composition (B) comprend le composé (B1) comme seul composé trifonctionnel.

Ledit composé (B1), également qualifié d'adduit de m-XDI et de triol, est obtenu par une réaction d'addition mettant en œuvre lesdits composés. Les modalités d'une telle réaction d'addition sont par exemple décrites dans la demande de brevet EP3101044 de MITSUI CHEMICALS.

Le triol mis en œuvre est, de préférence un triméthylolalcane comprenant un alcane comprenant de 1 à 20 atomes de carbone et 3 groupes méthylol tel que par exemple le trimethylolmethane, le trimethylolethane, le trimethylolpropane, le tri-methyloln-butane, le trimethylolisobutane, le trimethylols-butane, le trimethylolt-butane, le trimethylolpentane, le trimethylolhexane, le trimethylolheptane, le trimethylololoctane, le trimethylolnonane, le trimethylroldecane, le trimethylolundecane, et le trimethyloldo-decane.

De manière plus préférée, parmi les triols utilisables pour obtenir l'adduit de m-XDI et de triol, on peut citer le Glycérol de formule $HOH_2C\text{-}CHOH\text{-}CH_2OH$, le Triméthylolméthane (TMM) de formule $HC(CH_2\text{-}OH)_3$, le Triméthyloléthane (TME) de formule $H_3C\text{-}C(CH_2\text{-}OH)_3$ et le Triméthylolpropane (TMP) de formule $CH_3\text{-}CH_2\text{-}C(CH_2\text{-}OH)_3$.

Selon un mode de réalisation particulièrement préféré, le composé (B1) est l'adduit de m-XDI et de TMP, de formule :

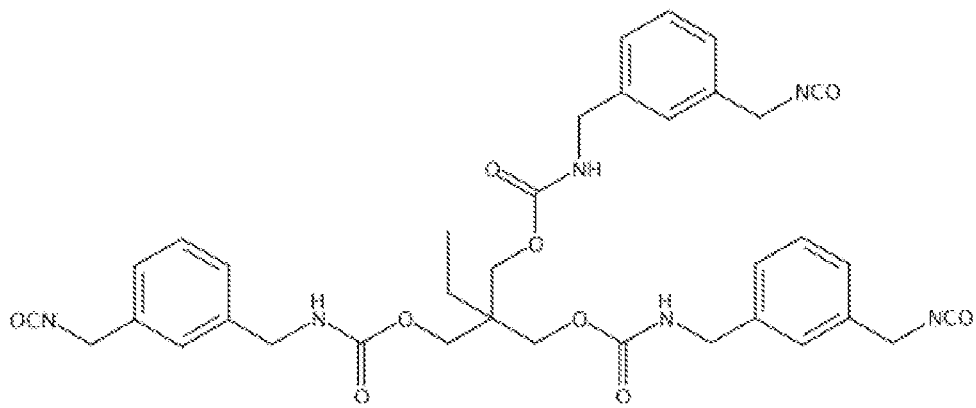

Des adduits de m-XDI et de triol sont également disponibles au plan commercial.

On peut citer par exemple l'adduit de m-XDI et de TMP disponible, en solution dans l'acétate d'éthyle à 75 %, auprès de la société MITSUI CHEMICALS sous la dénomination TAKENATE® D-1 10N. L'adduit de m-H6XDI et de TMP est également disponible, en solution dans l'acétate d'éthyle à 75 %, auprès de la société MITSUI CHEMICALS sous la dénomination TAKENATE® D-120N.

Selon un 2ème mode de réalisation, la composition **(B)** comprend un mélange du composé (B1) et d'un autre composé (B2) incluant 3 groupes terminaux -NCO, qui est un isocyanurate (B2-1) d'un diisocyanate aliphatique.

Selon une variante préférée, ledit diisocyanate aliphatique est choisi parmi le diisocyanate d'isophorone (IPDI), le diisocyanate d'hexaméthylène (HDI), le diisocyanate de pentaméthylène (PDI), le diisocyanate de méta-xylylène (m-XDI), le diisocyanate de méta-xylylène hydrogéné (m-H6XDI).

L'isocyanurate (B2-1) peut également être dénommé comme le trimère cyclique dudit diisocyanate aliphatique. Il est ainsi avantageusement choisi parmi les composés de la liste suivante :

- l'isocyanurate d'IPDI, de formule :

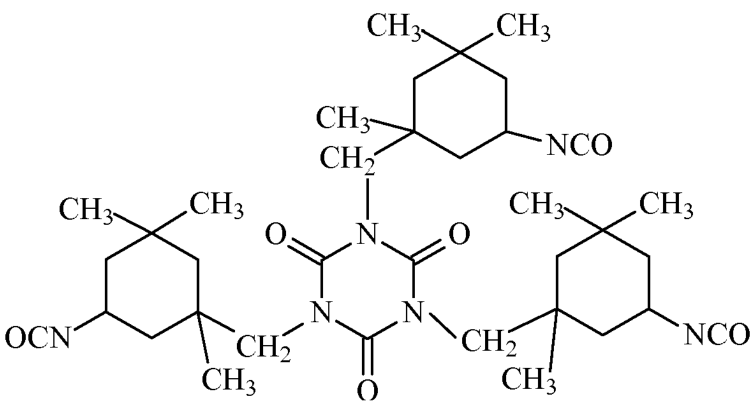

- l'isocyanurate d'HDI, de formule :

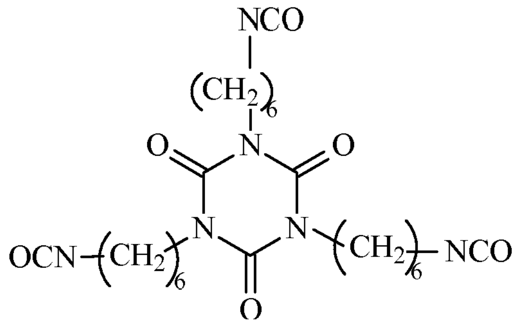

- l'isocyanurate de PDI, de formule :

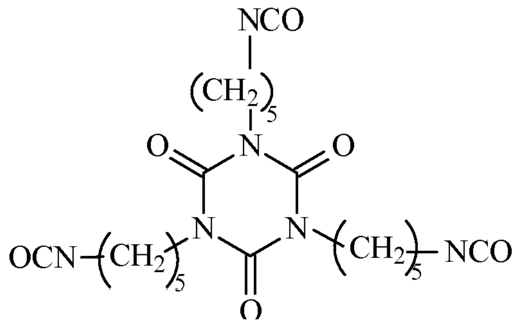

- l'isocyanurate de m-XDI, de formule :

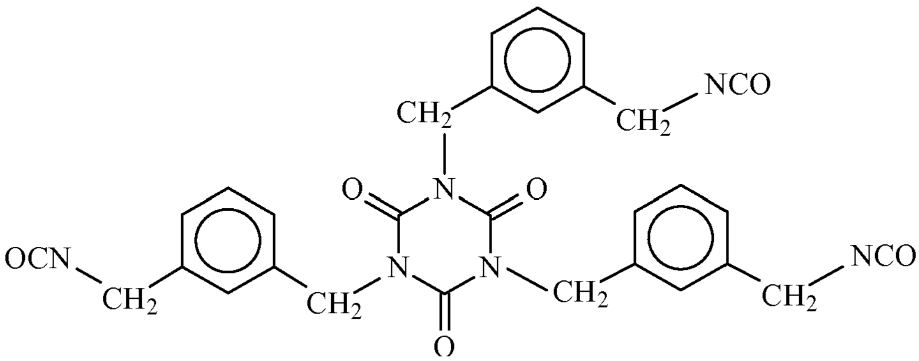

- l'isocyanurate de m-H6XDI de formule :

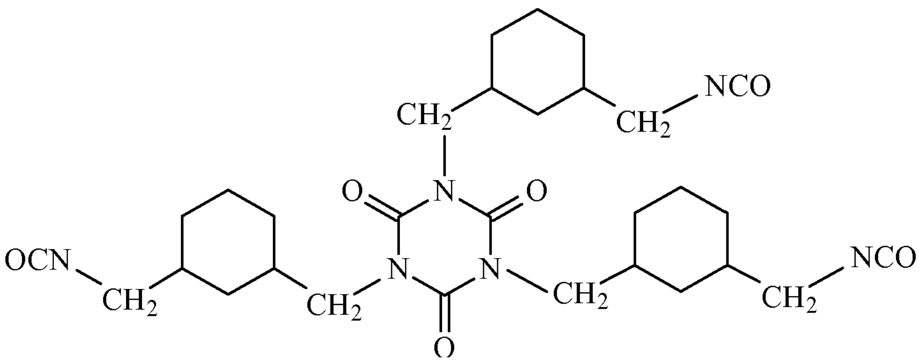

Ces isocyanurates sont généralement obtenus par une réaction de trimérisation des diisocyanates correspondants, telle que décrite par exemple dans les demandes de brevet EP 0047452 ou US 8097691 de BAYER.

Certains isocyanurates sont également disponibles industriellement, comme par exemple l'isocyanurate d'IPDI (ou trimère cyclique d'IPDI) auprès de la société EVONIK, sous la dénomination VESTANAT® T1890/100, qui est un

produit sans solvant.

Ces adduits sont généralement obtenus par une réaction d'addition des diisocyanates correspondants sur des triols selon le mode opératoire décrit dans la demande de brevet EP3101044 de MITSUI CHEMICALS.

Selon une variante davantage préférée, le diisocyanate aliphatique dont est dérivé le composé (B2) est le diisocyanate d'isophorone (IPDI).

Selon une variante encore plus préférée de ce 2$^{nd}$ mode de réalisation, la composition (B) comprend un mélange de :

- l'adduit (B1) de m-XDI et de Triméthylolpropane (TMP) ; et de
- l'isocyanurate d'IPDI en tant que composé (B2).

Lorsque, conformément au 2$^{ème}$ mode de réalisation de l'invention, la composition **(B)** comprend un mélange du composé (B1) et d'un autre composé (B2) comprenant 3 groupes terminaux -NCO, la teneur de (B1) dans le mélange (B1) + (B2) est d'au moins 40 % poids/poids. Ladite teneur est exprimée en poids de (B1) sur la base du poids total dudit mélange et est désignée ci-après par le libellé : rapport pondéral (B1)/[ (B1) + (B2)].

Le rapport pondéral (B1)/[ (B1) + (B2)] est de préférence d'au moins 50 % poids/poids et encore plus préférentiellement de 60 % poids/poids, une limite minimale de 65 % poids/poids étant particulièrement avantageuse.

Selon une variante tout particulièrement préférée, le rapport pondéral (B1)/[ (B1) + (B2)] est compris dans un domaine allant de 40 % à 80 % poids/poids, de préférence de 50 à 80 %, et encore plus préférentiellement de 60 à 80 %. La résistance à la stérilisation d'un quadruplex PET/ALU/OPA/cPP est alors particulièrement améliorée.

**<u>Composition adhésive bicomposante</u>** :

Ladite composition adhésive comprend, de manière préférée, un promoteur d'adhésion choisi parmi un aminosilane ou un uréidosilance, de préférence un aminosilane qui peut être compris dans le composant -NCO ou dans le composant -OH, de préférence dans le composant -OH.

Ledit promoteur est par exemple avantageusement choisi parmi ceux listés dans le tableau ci-dessous qui sont disponibles auprès de MOMENTIVE:

| Nom commercial | Nom chimique | N° CAS |
|---|---|---|
| Silquest® A-1100 | Aminopropyltriethoxysilane | 919-30-2 |
| Silquest® A-1110 | Aminopropyltrimethoxysilane | 13822-56-5 |
| Silquest® A-1170 | Bis(3-trimethoxysilyl)propylamine | 82985-35-1 |
| Silquest® A-1120 | Aminoethylaminopropyltrimethoxysilane | 1760-24-6 |
| Silquest® A-1130 | Diethtylenetriaminopropyltrimethoxysilane | 35141-30-1 |
| Silquest® A-1524 | gammma-ureidopropyltrimethoxysilane | 35141-30-1 |

Un aminosilane est préféré en tant que promoteur d'adhésion.

La teneur dudit promoteur d'adhésion peut varier de 0,5 à 5 % en poids, sur la base du poids total de la composition (A) ou (B).

Selon une variante davantage préférée, le promoteur d'adhésion est l'aminopropyltriméthoxysilane.

La composition (A) (composant -OH) comprend le prépolymère amorphe, linéaire ou ramifié, choisi parmi (A1) et (A2) en solution dans un solvant organique.

Ce dernier peut être un ester tel que l'acétate d'éthyle et l'acétate de butyle, une cétone telle que la méthyléthylcétone et la méthylisobutylcétone, et un composé aromatique telle que que le toluène et le xylène.

La quantité de solvant est ajustée par dilution de manière à obtenir une spécialité destinée aux complexeurs qui soit la plus concentrée possible ; une quantité d'extrait sec comprise 55 et 65 % en poids/poids étant généralement rencontrée dans la pratique.

La composition (B) (composant -NCO) comprend le composé (B1) et éventuellement (B2) également en solution dans un solvant organique dont la nature et la quantité sont tels que définis pour la composition (A).

Les compositions (A) et (B) sont préparées par simple mélange de leurs ingrédients à température ambiante, si nécessaire sous agitation.

La viscosité mesurée à 23°C de chacun des 2 composants -NCO et -OH est avantageusement inférieure ou égale à 10 Pa.s, de préférence à 5 Pa.s. Ladite viscosité est également mesurée à l'aide d'un viscosimètre Brookfield selon

la norme ISO 2555, publiée en 1999. Chacun des 2 composants, qui sont en pratique stockés séparément dans des réservoirs de capacité appropriée (par exemple des fûts de 200 1), peut être ainsi commodément introduit au moyen d'une pompe dans la machine de complexage.

Les quantités des composants -NCO et -OH de la composition adhésive bicomposante selon l'invention sont telles que le rapport équivalent molaire -NCO / -OH est compris dans un domaine allant de 3 à 5, de préférence de 3,5 à 4,5. On entend par rapport équivalent molaire -NCO/-OH le rapport du nombre équivalent de groupes -NCO (présents dans le composant - NCO) sur le nombre équivalent de groupes -OH (présents dans le composant -OH).

Le mélange des composants -NCO et -OH, dans le rapport indiqué, est réalisé à température ambiante par l'opérateur de la machine de complexage, préalablement à sa mise en route. La viscosité de la composition adhésive ainsi obtenue peut être ajustée par simple rajout de solvant, résultant en une quantité finale d'extrait sec de la composition adhésive qui peut varier en pratique de 30 à 40 % poids/poids. La composition adhésive ainsi obtenue est tout à fait adaptée à sa mise en œuvre dans une machine de complexage et à un fonctionnement correct de celle-ci.

La composition adhésive bicomposante selon l'invention peut en outre comprendre des additifs pouvant être compris dans le composant -NCO et/ou dans le composant -OH, tels que des additifs rhéologiques, des catalyseurs ou encore des plastifiants. La teneur totale de ces additifs optionnels, dans chacun des composants -NCO et/ou-OH, peut aller jusqu'à 2 % en poids, sur la base du poids total du composant considéré.

Ainsi, et selon une variante préférée, la composition adhésive bicomposante selon l'invention est telle que la composition (A) est constituée d'une solution organique :

- du prépolymère amorphe choisi parmi (A1) et (A2), et
- éventuellement d'un promoteur d'adhésion présent à raison de 0,5 à 5 % en poids, sur la base du poids total de la composition (A), et
- éventuellement d'additifs optionnels présents à raison de jusqu'à 2 % en poids, sur la base du poids total de la composition (A).

Selon une autre variante préférée, la composition adhésive bicomposante selon l'invention est telle que la composition (B) est constituée d'une solution organique :

- du composé (B1) seul ou en mélange avec le composé (B2), et
- éventuellement d'un promoteur d'adhésion présent à raison de 0,5 à 5 % en poids, sur la base du poids total de la composition (B), et
- éventuellement d'additifs optionnels présents à raison de jusqu'à 2 % en poids, sur la base du poids total de la composition (B).

Selon une variante davantage préférée, les additifs optionnels présents dans la composition (A) et/ou la composition (B) sont choisis parmi des additifs rhéologiques, des catalyseurs ou encore des plastifiants.

**Film multicouche** :

L'invention concerne également un film multicouche (ou complexe) comprenant 2 couches minces de matériau liées entre elles par une couche continue, caractérisé en ce que ladite couche est constituée par la composition adhésive bicomposante selon l'invention à l'état réticulé, à raison d'une quantité inférieure à 7 $g/m^2$.

Selon une variante de l'invention, ladite quantité est comprise dans un domaine allant de 0,5 à 5 $g/m^2$, et de préférence allant de 1 à 4 $g/m^2$.

Les matériaux dont sont constituées les couches minces entourant la couche adhésive sont généralement choisis parmi le papier, un métal, comme par exemple l'aluminium ou les polymères thermoplastiques tels que :

- le polyéthylène (PE),
- le polypropylène (PP), et notamment le polypropylène coulé (« cast » en anglais) abrégé en cPP,
- un copolymère à base d'éthylène et de propylène,
- le polyamide (PA), et notamment le polyamide bi-orienté (ou OPA ou boPA)
- le polyéthylènetéréphtalate (PET), ou encore
- un copolymère à base d'éthylène comme par exemple un copolymère greffé anhydride maléïque, un copolymère d'éthylène et d'acétate de vinyle (EVA), un copolymère d'éthylène et d'alcool vinylique (EVOH), un copolymère d'éthylène et d'un acrylate d'alkyle tel que l'acrylate de méthyle (EMA) ou de butyle (EBA),
- le polystyrène (PS),
- le polychlorure de vinyle (PVC),
- le polyfluorure de vinylidène (PVDF),

- un polymère ou copolymère d'acide lactique (PLA), ou
- un polyhydroxyalkanoate (PHA).

Les matériaux choisis préférentiellement pour constituer les couches minces entourant la couche adhésive sont le l'aluminium, le PE, le PP, le PET et le PA.

On peut également citer une couche mince constituée d'un polymère thermoplastique, préférentiellement de PE, PP ou PET, recouverte d'une couche de moins de 1 μm d'aluminium, d'alumine ou de silice SiOx. Une couche mince revêtue d'une telle couche est, par exemple, notée $PET_{SiOx}$.

L'épaisseur des 2 couches minces adjacentes à la couche adhésive et des autres couches mises en œuvre dans le film multicouche selon l'invention est susceptible de varier dans un large domaine allant de 5 à 150 μm, de préférence de 7 à 80 μm. L'épaisseur totale dudit film est susceptible de varier également dans un large domaine allant de 20 à 400 μm.

Selon une variante préférée, le film comprend 2 à 4 couches minces de matériaux, le dit film étant alors dénommé, respectivement duplex, triplex ou quatruplex.

Selon un mode de réalisation, le dit film est choisi parmi :

- un film duplex : boPA/cPP ;
- un film triplex : PET/ALU/cPP ou $PET_{SiOx}$/boPA/cPP ; ou encore
- un film quadruplex : PET/ALU/boPA/cPP.

Dans le cas d'un film triplex, quadruplex ou plus généralement d'un film multiplex comprenant plusieurs couches minces de matériau (ou films individuels), chaque paire de couches minces de matériau adjacentes est liée par une couche de composition adhésive.

L'invention concerne encore un procédé de préparation en continu du film multicouche tel que défini précédemment, comprenant les étapes séquentielles de :

(i) combinaison des composants -NCO et -OH, et, le cas échéant, dilution avec un solvant, pour former un mélange adhésif ;
(ii) enduction par ledit mélange adhésif d'une première couche mince de matériau sous la forme d'une couche substantiellement continue ;
(iii) évaporation du solvant organique ;
(iv) contrecollage d'une seconde couche mince sur la première couche mince enduite conformément à l'étape (ii), puis
(v) réticulation du mélange adhésif.

Lorsque le film multicouche est un film triplex A/B/C :

- on prépare dans une 1$^{ère}$ étape le duplex A/B conformément au dit procédé, puis
- on répète les étapes (i), (ii), (iii) et (iv) en utilisant comme 1$^{ère}$ couche mince de matériau ledit duplex A/B, et comme 2$^{nde}$ couche mince le film C.

Un tel film triplex A/B/C peut être obtenu, selon une première variante, en récupérant la bobine de film duplex A/B obtenue en fin de 1$^{ère}$ étape, et en l'utilisant pour alimenter la machine de complexage en combinaison avec la bobine de film C. Selon une seconde variante, l'enduction de la couche A, le contrecollage de la couche B, puis l'enduction du duplex A/B et le contrecollage de la couche C sont réalisés directement en ligne, par une machine de complexage adaptée à un tel triplexage en ligne.

L'invention concerne enfin l'utilisation du film multicouche selon l'invention pour la fabrication d'emballages flexibles. Les films complexes selon l'invention sont en effet utilisables pour la fabrication d'emballages flexibles les plus divers, qui sont mis en forme puis fermés (après l'étape de conditionnement du produit destiné au consommateur) par des techniques de thermoscellage (ou thermosoudage).

Selon une variante préférée, les films multicouches selon l'invention sont utilisés pour la fabrication d'emballages flexibles destinés à des traitements de stérilisation, tels que la stérilisation des produits alimentaires conditionnés dans lesdits emballages flexibles.

L'invention est à présent décrite dans les exemples de réalisation suivants qui sont donnés à titre purement illustratif, et ne sauraient être interprétés pour en limiter la portée.

**Exemple 1 (référence) : Composant -OH** - Préparation d'une composition (A) comprenant un copolyester diol amorphe (A1) et l'aminopropyltriméthoxysilane :

On prépare tout d'abord, selon le mode opératoire indiqué ci-après, un copolyester diol amorphe linéaire (A1).
Dans un réacteur fermé de 1 litre, équipé d'une agitation, d'une colonne de distillation, de moyens de chauffe, d'un thermomètre et relié à une pompe à vide, on introduit 35,120 g de monoéthylène glycol et 154,435 g de diéthylène glycol.
Lorsque la température du mélange réactionnel atteint 120°C, on introduit dans le réacteur : 76,190 g d'acide adipique, 170,035 g d'acide isophtalique, 64,165 g d'acide téréphtalique et 0,035 g d'un catalyseur à base d'un chelate de titane (TYZOR® LA de la société DuPont).
Ensuite une rampe de température est programmée afin d'atteindre une température de 230°C en 3h. On mesure ensuite l'indice d'acide ($I_a$). La réaction est stoppée lorsque l'indice d'acide $I_a$ est inférieur à 25 mg KOH/g.
0,020 g d'un catalyseur à base de titane (de formule $(nBuO)_4Ti$, TYZOR® TnBT de la société DuPont) est alors introduit, puis le réacteur est mis sous vide (atteinte de 15 mbar en 2h) et le mélange réactionnel est chauffé à 240°C.
On procède à des mesures de l'$I_a$ et de la viscosité brookfield à 180°C. La réaction est stoppée lorsque l'$I_a$ est inférieur à 3 mg KOH/g et lorsque la viscosité est comprise entre 8000 et 9000 mPa.s.
Le copolyester diol obtenu est ensuite refroidi à 200°C puis est coulé lentement dans l'acétate d'éthyle à température ambiante sous agitation, pour former une solution à 59,47 % poids/poids.
L'IOH du copolyester diol ainsi obtenu a été mesuré selon la norme ISO 14900:2017 et est égal à 10 mg KOH/g, correspondant à un Mn de 11220 g/mole.
Le Silquest® A1110 est rajouté dans ladite solution, en tant que promoteur d'adhésion, après refroidissement à 45°C et à une teneur de 0,89 % poids/poids.
La teneur pondérale en fonctions -OH du composant -OH est de 0,18 % poids/poids.
La viscosité Brookfield à 23°C du composant -OH est de 5 Pa.s.

**Exemple 2 (référence) : Composant -NCO -** Préparation d'une solution (B) dans l'acétate d'éthyle de l'adduit (B1) de m-XDI et de Triméthylolpropane (TMP) :

On utilise pour l'adduit (B1) de m-XDI et de TMP le produit TAKENATE® D-110N commercialisé par la société MITSUI CHEMICALS qui est une solution dudit adduit à 75 % poids/poids dans l'acétate d'éthyle et dont la teneur en fonction -NCO, exprimée en % poids/poids, est de 11,5 %.
Ledit produit TAKENATE® D-110N est simplement introduit à température ambiante dans un réacteur en verre maintenu sous agitation et sous azote ; la teneur en ingrédient (B1) de la solution (B) est indiquée dans le tableau 1, exprimée en % poids/poids.
La viscosité Brookfield à 23°C est mesurée et la valeur obtenue est indiquée dans le tableau 1.
La teneur pondérale en % poids/poids en fonction -NCO est également indiquée dans le tableau 1.

**Exemple 3 (référence) : Composant -NCO** - Préparation d'une solution (B) dans l'acétate d'éthyle de l'adduit (B1) de m-XDI et de TMP, et de l'isocyanurate d'IPDI (B2) :

On utilise pour l'isocyanurate d'IPDI le produit VESTANAT® T1890/100 commercialisé par la société EVONIK, qui est exempt de solvant et dont la teneur exprimée en % poids/poids en fonction -NCO est de 17,3 %.
L'adduit (B1) de m-XDI et de TMP est toujours le TAKENATE® D-110N.
Dans un réacteur en verre maintenu sous agitation constante et sous azote, l'isocyanurate d'IPDI (B2) est dissous dans de l'acétate d'éthyle préalablement chauffé à 50°C. Après sa dissolution totale, l'adduit (B1) de m-XDI et de TMP est introduit dans le mélange à la même température.
Le mélange est maintenu à 70°C et homogénéisé durant 30 minutes.
On obtient une solution dont les teneurs en ingrédients sont indiquées dans le tableau 1.
La viscosité Brookfield à 23°C est mesurée et la valeur obtenue est indiquée dans le tableau 1.
La teneur pondérale en % poids/poids en fonction -NCO est mesurée selon la norme NF T52-132 et reportée dans le tableau 1.
Le rapport pondéral (B1)/[ (B1) + (B2)] est également indiqué dans le tableau 1.

**Exemple 4 à 5 (référence) et 6 (comparatif): Composant -NCO** - Préparation de solutions (B) dans l'acétate d'éthyle de l'adduit (B1) de m-XDI et de TMP, et de l'isocyanurate d'IPDI (B2) :

On répète l'exemple 3 pour différentes teneurs en (B1) et (B2).
La viscosité Brookfield à 23°C, le rapport pondéral (B1)/[ (B1) + (B2)] et la teneur pondérale en % poids/poids en

fonction -NCO sont également reportés dans le tableau 1.

**Exemple 1/2 (selon l'invention) : Composition adhésive bicomposante** obtenue par mélange du composant -OH de l'exemple 1 et du composant -NCO de l'exemple 2 :

Le composant -OH de l'exemple 1 est mélangé au composant -NCO de l'exemple 2 à raison d'un rapport équivalent molaire -NCO/-OH égal à 4,13, ce qui correspond à un rapport pondéral : composant -NCO/composant -OH égal à 100 g de composant -OH pour 16 g de composant -NCO.

Le mélange est effectué à température ambiante dans le bac d'alimentation de la machine de complexage, via une unité de mélange et un mélangeur statique.

Les données constitutives de la composition adhésive bicomposante sont reportées dans le tableau 2.

**Exemples 1/3, 1/4 et 1/5 (selon l'invention) et 1/6 (comparatif): Compositions adhésives bicomposantes**

L'exemple 1/2 précédent est répété en remplaçant le composant -NCO de l'exemple 2 par le composant -NCO des exemples, respectivement, 3, 4, 5 et 6.

Les valeurs du rapport équivalent molaire -NCO/-OH, du rapport pondéral: composant -NCO/composant -OH sont également reportées dans le tableau 2.

**Exemple 7** (selon l'invention) : **Film duplex** boPA/cPP

On prépare un film duplex constitué d'un film de boPA et d'un film de cPP liés par une couche de composition adhésive.

On utilise un film de polyamide biorienté d'épaisseur 15 $\mu$m et un film de polypropylène coulé d'épaisseur 60 $\mu$m.

Ce film duplex est obtenu en alimentant le bac d'une machine de complexage de type Nordmeccanica par la composition adhésive bicomposante, pour chacun des exemples 1/2 à 1/6.

Ladite machine de complexage est pourvue d'un dispositif d'enduction de type rouleau avec bac ouvert, fonctionnant à la température ambiante et à une vitesse de défilement de 50 m/minute ; la couche adhésive liant les films de boPA et de cPP présente une épaisseur d'environ 3,5 $\mu$m correspondant à environ 3,5 g/m$^2$ de composition adhésive.

Ce film duplex est soumis aux tests suivants.

**A. Détermination de la durée de réticulation** :

A.1. Principe du test :

Ce test a pour but de mesurer la durée (exprimée en jours) nécessaire à la réticulation de l'adhésif bicomposant constitutif de la couche adhésive du film duplex, à compter de la fabrication dudit film par complexage.

Cette durée est évaluée par le nombre de jours nécessaire pour que le film soit suffisamment cohésif, et, plus précisément, pour que la cohésion dudit film, mesurée par le test de pelage à 180° (décrit ci-après), soit supérieure à une valeur de référence égale à 3 N/15 mm.

A.2. Echantillonnage du film :

Immédiatement après sa fabrication, le film duplex est stocké à une température de 23°C et sous une atmosphère à 50 % d'humidité relative (HR).

Un échantillon est prélevé chaque jour sur le film duplex ainsi stocké et est soumis au test de pelage à 180°.

A.3. Description du test de pelage à 180° :

Le test de pelage à 180° est tel que décrit dans la norme française NF T 54-122. Le principe de ce test consiste en la détermination de la force nécessaire à la séparation (ou pelage) de 2 couches individuelles de films liées par l'adhésif bicomposant.

Une éprouvette de forme rectangulaire de 15 mm de large et d'environ 10 cm de long est découpée dans le film duplex. On décolle manuellement à partir de l'extrémité de cette éprouvette, et sur environ 2 cm, les 2 couches individuelles de film comprises dans cette bande et les 2 extrémités libres ainsi obtenues sont fixées sur deux dispositifs d'attache reliés, respectivement, à une partie fixe et une partie mobile d'un appareil de traction qui sont situées sur un axe vertical.

Alors qu'un mécanisme d'entraînement communique à la partie mobile une vitesse uniforme de 100 mm/minute, conduisant au décollement des 2 couches dont les extrémités décollées se déplacent progressivement selon un axe vertical en formant un angle de 180°, la partie fixe -reliée à un dynamomètre- mesure la force qui est supportée par l'éprouvette ainsi maintenue, et qui est exprimée en N/15mm.

A.4. Résultat :

La durée de réticulation est indiquée en jour, pour chacune des compositions adhésives bicomposantes 1/2 à 1/6, dans le tableau 2.

**B. Détermination du collant initial :**

Le collant initial est évalué par mesure de la cohésion du film duplex immédiatement après sa fabrication, au moyen du test de pelage à 180°C décrit précédemment au § A.3.

Le résultat est indiqué en N/15 mm dans le tableau 2, pour chacune des compositions adhésives bicomposantes 1/2 à 1/6.

Les valeurs obtenues sont supérieures à 2 N/15 mm, et correspondent ainsi à un tack initial tout à fait satisfaisant.

**Exemple 8** (selon l'invention) : **Film triplex** PET/ALU/cPP

On prépare un film triplex constitué d'un premier film en PET, d'un second film en aluminium et d'un troisième film en cPP liés au niveau de chaque interface par une couche de composition adhésive.

On utilise un film de PolyEthylèneTéréphtalate d'épaisseur 12 $\mu$m, un film d'aluminium d'épaisseur 7 $\mu$m et un film de PolyPropylène coulé d'épaisseur 60 $\mu$m.

Ce film triplex est obtenu selon un procédé séquentiel en alimentant le bac d'une machine de complexage de type Nordmeccanica par la composition adhésive bicomposante, pour chacun des exemples 1/2 à 1/6.

Ladite machine de complexage est pourvue d'un dispositif d'enduction de type rouleau avec bac ouvert, fonctionnant à la température ambiante et à une vitesse de défilement de 50 m/minute. La couche adhésive liant les 3 films au niveau de chaque interface PET/ALU et ALU/cPP présente une épaisseur d'environ 3,5 $\mu$m correspondant à environ 3,5 g/$m^2$ de composition adhésive.

Ce film triplex est soumis au test de résistance à la stérilisation décrit ci-dessous.

**Résistance à la stérilisation :**

Le film triplex est après sa fabrication placé durant 7 jours dans une enceinte climatique maintenue à une température de 40°C.

On prélève alors un échantillon de forme rectangulaire et de format A4 (dimensions 21 x 29,7 cm), qui est plié en 2 dans le sens de la longueur, en exerçant une pression manuelle sur le pli.

Cet échantillon est placé dans un autoclave à 135°C en phase vapeur durant une heure pour simuler un traitement de stérilisation.

L'échantillon est ensuite maintenu à température ambiante durant 1 heure et l'on procède ensuite à la mesure de la cohésion de l'interface PET/ALU du film, au moyen du test de pelage à 180°C décrit précédemment au § A.3.

Le résultat est indiqué en N/15 mm dans le tableau 2, pour chacune des compositions adhésives bicomposantes 1/2 à 1/6.

Ces opérations sont répétées sur un autre échantillon du film pour déterminer la cohésion de l'interface ALU/cPP.

Les valeurs obtenues sont toutes supérieures à 3 N/15 mm, correspondant ainsi à une résistance à la stérilisation du triplex tout à fait satisfaisante.

**Exemple 9** (selon l'invention) : **Film triplex** $PET_{SiOx}$/boPA/cPP

On répète l'exemple 8 en utilisant un film de PET d'épaisseur 12 $\mu$m enduit d'un revêtement de silice SiOx d'épaisseur inférieure à 0,1 $\mu$m, un film de polyamide biorienté d'épaisseur 15 $\mu$m et un film de polypropylène coulé d'épaisseur 60 $\mu$m. Le film $PET_{SiOx}$ est par exemple disponible auprès de la société AMCOR sous la marque CERAMIS®.

Les résultats du test de résistance à la stérilisation sont reportés dans le Tableau 2.

Les valeurs obtenues à l'interface boPA/cPP sont supérieures à 3 N/15 mm, et tout à fait satisfaisantes.

Les valeurs obtenues à l'interface $PET_{SiOx}$/boPA sont supérieures à 2 N/15 mm, ce qui est considéré également

comme tout à fait satisfaisant, dans le cas d'une interface qui comprend une couche mince constituée d'un polymère thermoplastique recouverte d'une couche de moins de 1 μm d'aluminium, d'alumine ou de silice SiOx.

**Exemple 10** (selon l'invention) : **Film quadruplex** PET/ALU/boPA/cPP

On prépare, selon un procédé analogue à celui décrit aux exemples 8 et 9, un film quadruplex PET/ALU/boPA/cPP, en utilisant des films individuels de même épaisseur que les films mis en oeuvre dans les exemples précédents.

Le test de résistance à la stérilisation est également répété, en y ajoutant un contrôle, par examen visuel, de la qualité de la lamination au niveau pli formé dans l'échantillon de film complexe.

Les résultats sont reportés dans le Tableau 3.

Les valeurs de peel obtenues aux 3 interfaces sont supérieures à 3 N/15 mm, et tout à fait satisfaisantes.

Tableau 1 – Compositions (B) (composant –NCO)

| | | Teneur (en % poids/poids) | | | | |
|---|---|---|---|---|---|---|
| | Ingrédient | Ex. 2 (référence) | Ex. 3 (référence) | Ex. 4 (référence) | Ex. 5 (référence) | Ex. 6 (comparatif) |
| (B1) | Adduit m-XDI et TMP | 75 | 64,95 | 54,9 | 51,60 | 26,25 |
| (B2) | Isocyanurate d'IPDI | - | 10 | 20 | 23,40 | 49 |
| | Acétate d'éthyle | 25 | 25,05 | 25,02 | 25 | 24,75 |
| Composition (B) | Viscosité Brookfield à 23°C (mPa.s) | 550 | 1290 | 980 | 1070 | 2700 |
| | rapport pondéral (B1)/[ (B1) + (B2)] (en %) | 100 | 87 | 73 | 69 | 35 |
| | Teneur pondérale en –NCO (en %) | 11,50 | 11,69 | 11,60 | 11,00 | 12,50 |

Tableau 2 – Compositions adhésives bicomposantes

| | | Ex. 1/2 | Ex. 1/3 | Ex. 1/4 | Ex. 1/5 | Ex. 1/6 (comp.) |
|---|---|---|---|---|---|---|
| | Composant -OH | Exemple 1 | Exemple 1 | Exemple 1 | Exemple 1 | Exemple 1 |
| | Composant -NCO | Ex. 2 (réf.) | Ex. 3 (réf.) | Ex. 4(réf) | Ex. 5(réf) | Ex. 6 (comp.) |
| | Rapport équivalent molaire –NCO/-OH | 4,13 | 4,20 | 3,91 | 3,95 | 4,21 |
| | Rapport pondéral composant –NCO/-OH | 16/100 | 16/100 | 15/100 | 16/100 | 15/100 |
| Duplex boPA/cPP | Durée de réticulation (en jours) | 1 | 1 | 1 | 1 | > 7 |
| | Collant initial (N/15 mm) | 5,00 | 4,51 | 2,29 | 2,30 | 3,02 |
| | Résistance à la stérilisation | | | | | |
| Triplex PET/ALU/cPP | Peel interface PET/ALU (N/15 mm) | 3,72 | 4,89 | 3,95 | 4,36 | 4,97 |
| | Peel interface ALU/cPP (N/15 mm) | 4,21 | 4,82 | 4,55 | 4,49 | 4,85 |
| Triplex $PET_{SiOx}$/boPA/cPP | Peel interface $PET_{SiOx}$/boPA (N/15 mm) | 3,03 | 2,84 | 2,29 | 2,55 | 3,23 |
| | Peel interface boPA/cPP (N/15 mm) | 5,35 | 6,87 | 6,88 | 5,99 | 5,01 |

Tableau 3

| | Résistance à la stérilisation | Ex. 1/2 | Ex. 1/3 | Ex. 1/4 | Ex. 1/5 | Ex. 1/6 (comp.) |
|---|---|---|---|---|---|---|
| Quadruplex PET/ALU/boPA/cPP | Peel interface PET/ALU (N/15 mm) | 5,53 | 4,92 | 3,75 | 4,69 | 6,63 |
| | Peel interface ALU/boPA (N/15 mm) | 3,49 | 5,67 | 5,85 | 5,71 | 5,35 |
| | Peel interface boPA/ cPP (N/15 mm) | 5,87 | 6,15 | 6,20 | 6,58 | 7,73 |
| | Aspect du film au niveau du pli | Présence de cloques | Présence de cloques | conforme | conforme | conforme |

## Revendications

1. Composition adhésive bicomposante solvantée de type polyuréthane, comprenant un composant -OH et un composant -NCO tels que :

   - le composant -OH est une composition **(A)** comprenant un prépolymère amorphe qui inclut 2 groupes terminaux -OH, dont la masse molaire moyenne en nombre Mn va de 8000 à 12000 g et qui est choisi parmi:

     - un copolyester **(A1)** obtenu par une réaction de polycondensation :

       - d'au moins un diol aliphatique (i) ; avec
       - au moins un diacide aromatique (ii) choisi parmi l'acide téréphtalique, l'acide isophtalique, l'acide phtalique et un de leurs dérivés diesters ou anhydride ; et
       - au moins un diacide aliphatique (iii) ou un de ses dérivés diesters ou anhydride ; et

     - un polyuréthane **(A2)** obtenu par une réaction de polyaddition entre un composé diisocyanate aliphatique (A2.P1) et un copolyester amorphe diol (A2.P2) dont la masse moléculaire moyenne en nombre Mn va de 4000 à 11500 g/mole, ledit copolyester étant obtenu par la réaction de polycondensation telle que définie ci-dessus pour (A1) ; et

   - le composant -NCO est une composition **(B)** comprenant un composé **(B1)** qui inclut 3 groupes terminaux -NCO, et qui est obtenu par la réaction du diisocyanate de méta-xylylène (m-XDI) avec un triol, ledit composé **(B1)** étant :

     - ou bien le seul composé compris dans (B) incluant 3 groupes terminaux -NCO;
     - ou bien en mélange avec un autre composé **(B2)** incluant 3 groupes terminaux -NCO, (B2) étant un isocyanurate (B2-1) d'un diisocyanate aliphatique et la teneur de (B1) dans ledit mélange étant d'au moins 40 % en poids, sur la base du poids total dudit mélange.

2. Composition adhésive selon la revendication 1, **caractérisée en ce que** le prépolymère amorphe compris dans la composition (A) est le copolyester diol amorphe (A1) et le diol (i) est choisi parmi l'éthylène glycol, le diéthylène glycol, le triméthylène glycol, l'hexaméthylène glycol, le propylène glycol, le propane-1,3-diol, le butanediol (-1,4, -1,3 ou -1,2), le néopentyl glycol, le 2-méthyl-1,3-propane diol, l'hexane diol ou encore le cyclohexanedimethanol.

3. Composition adhésive selon la revendication 2, **caractérisée en ce que** le diacide aliphatique (iii) est choisi parmi l'acide adipique, l'acide azélaïque, l'acide sébacique, l'acide cyclohexanedicarboxylique, l'acide dodécanedicarboxylique, l'acide 1,10-décanedicarboxylique et l'acide succinique.

4. Composition adhésive selon l'une des revendications 2 à 3, **caractérisée en ce que** le copolyester diol (A1) est obtenu par polycondensation :

   - de 2 diols aliphatiques (i) constitués, respectivement, par l'éthylène glycol et le diéthylène glycol ; avec
   - 2 diacides (ii) constitués, respectivement, par l'acide téréphtalique et l'acide isophtalique ; et
   - de l'acide adipique en tant que diacide aliphatique (iii).

5. Composition adhésive selon la revendication 1, **caractérisée en ce que** le composé **(B1)** est le seul composé compris dans la composition (B) incluant 3 groupes terminaux -NCO.

6. Composition adhésive selon l'une des revendications 1 ou 5, **caractérisée en ce que** le composé **(B1)** est l'adduit de m-XDI et de Triméthylolpropane (TMP).

7. Composition adhésive selon la revendication 1, **caractérisée en ce que** le composé **(B1)** est en mélange avec le composé **(B2).**

8. Composition adhésive selon la revendication 7, **caractérisée en ce que** le composé **(B2)** est un dérivé du diisocyanate d'isophorone (IPDI).

9. Composition adhésive selon l'une des revendications 7 ou 8, **caractérisée en ce que** la composition (B) comprend un mélange de :

- l'adduit (B1) de m-XDI et de Triméthylolpropane (TMP) ; et de
- l'isocyanurate d'IPDI en tant que composé (B2).

**10.** Composition adhésive selon l'une des revendications 7 à 9, **caractérisée en ce que** la teneur de (B1) dans le mélange de (B1) et (B2) est comprise dans un domaine allant de 40 % à 80 % poids/poids.

**11.** Composition adhésive selon l'une des revendications 1 à 10, **caractérisée en ce qu'**elle comprend un promoteur d'adhésion compris dans le composant - NCO ou dans le composant -OH, de préférence dans le composant -OH.

**12.** Composition adhésive selon la revendication 11, **caractérisée en ce que** le promoteur d'adhésion est un aminosilane.

**13.** Composition adhésive selon l'une des revendications 1 à 12, **caractérisée en ce que** les quantités des composants -NCO et -OH sont telles que le rapport équivalent molaire -NCO / -OH est compris dans un domaine allant de 3 à 5.

**14.** Film multicouche comprenant 2 couches minces de matériau liées entre elles par une couche continue, **caractérisé en ce que** ladite couche est constituée par la composition adhésive bicomposante telle que définie dans l'une des revendications 1 à 13, à l'état réticulé, à raison d'une quantité inférieure à 7 $g/m^2$.

**15.** Procédé de préparation en continu du film multicouche tel que défini dans la revendication 14, comprenant les étapes séquentielles de :

(i) combinaison des composants -NCO et -OH et, le cas échéant, dilution avec un solvant, pour former un mélange adhésif ;
(ii) enduction par ledit mélange adhésif d'une première couche mince de matériau sous la forme d'une couche substantiellement continue ;
(iii) évaporation du solvant organique ;
(iv) contrecollage d'une seconde couche mince sur la première couche mince enduite conformément à l'étape (ii), puis
(v) réticulation du mélange adhésif.

**16.** Utilisation du film multicouche tel que défini dans la revendication 14, pour la fabrication d'emballages flexibles.

## Patentansprüche

**1.** Zweikomponentenklebstoffzusammensetzung des Polyurethantyps auf Lösungsmittelbasis, umfassend eine - OH Komponente und eine -NCO Komponente, derart dass:

- die -OH Komponente eine Zusammensetzung (A) ist, die ein amorphes Präpolymer umfasst, das 2 endständige Gruppen -OH umfasst, deren zahlenmittlere Molmasse Mn von 8000 bis 12000 g reicht und die aus den Folgenden ausgewählt ist:

  - einem Copolyester (A1), der durch eine Polykondensationsreaktion:

    - mindestens eines aliphatischen Diols (i) mit
    - mindestens einer aromatischen Disäure (ii), ausgewählt aus Terephthalsäure, Isophthalsäure, Phthalsäure und einem ihrer Diester- oder Anhydridderivate, und
    - mindestens einer aliphatischen Disäure (iii) oder einem ihrer Diester- oder Anhydridderivate erhalten wird, und
    - einem Polyurethan (A2), das durch eine Polyadditionsreaktion zwischen einer aliphatischen Diisocyanatverbindung (A2.P1) und einem amorphen Copolyesterdiol (A2.P2) erhalten wird, dessen zahlenmittlere Molmasse Mn von 4000 bis 11500 g/mol reicht, wobei der Copolyester durch die Polykondensationsreaktion, wie vorstehend für (A1) definiert, erhalten wird, und
    - die -NCO Komponente eine Zusammensetzung (B) ist, die eine Verbindung (B1) umfasst, die 3 endständige Gruppen -NCO enthält und die durch Reaktion von meta-Xylyloldiisocyanat (m-XDI) mit einem Triol erhalten wird, wobei die Verbindung (B1) die Folgende:

- oder die einzige in (B) enthaltene Verbindung mit 3 endständigen Gruppen -NCO ist
- oder auch im Gemisch mit einer anderen Verbindung (B2) vorliegt, die 3 endständige Gruppen -NCO enthält, wobei (B2) ein Isocyanurat (B2-1) eines aliphatischen Diisocyanats ist und der Gehalt an (B1) im Gemisch mindestens 40 Gew.-%, bezogen auf das Gesamtgewicht des Gemischs, beträgt.

**2.** Klebstoffzusammensetzung nach Anspruch 1, **dadurch gekennzeichnet, dass** das in der Zusammensetzung (A) enthaltene amorphe Präpolymer das amorphe Copolyesterdiol (A1) ist und das Diol (i) aus Ethylenglykol, Diethylenglykol, Trimethylenglykol, Hexamethylenglykol, Propylenglykol, Propan-1,3-diol, (1,4-, 1,3- oder 1,2-)Butandiol, Neopentylglykol, 2-Methyl-1,3-propandiol, Hexandiol oder Cyclohexandimethanol ausgewählt ist.

**3.** Klebstoffzusammensetzung nach Anspruch 2, **dadurch gekennzeichnet, dass** die aliphatische Disäure (iii) aus Adipinsäure, Azelainsäure, Sebacinsäure, Cyclohexandicarbonsäure, Dodecandicarbonsäure, 1,10-Decandicarbonsäure und Bernsteinsäure ausgewählt ist.

**4.** Klebstoffzusammensetzung nach einem der Ansprüche 2 bis 3, **dadurch gekennzeichnet, dass** das Copolyesterdiol (A1) durch Polykondensation:

- 2er aliphatischer Diole (i), die jeweils aus Ethylenglykol und Diethylenglykol bestehen, mit
- 2 Disäuren (ii), die jeweils aus Terephthalsäure und Isophthalsäure bestehen, und
- Adipinsäure als aliphatischer Disäure (iii) erhalten wird.

**5.** Klebstoffzusammensetzung nach Anspruch 1, **dadurch gekennzeichnet, dass** die Verbindung (B1) die einzige in der Zusammensetzung (B) enthaltene Verbindung mit 3 endständigen Gruppen -NCO ist.

**6.** Klebstoffzusammensetzung nach einem der Ansprüche 1 oder 5, **dadurch gekennzeichnet, dass** die Verbindung (B1) das Addukt von m-XDI und Trimethylolpropan (TMP) ist.

**7.** Klebstoffzusammensetzung nach Anspruch 1, **dadurch gekennzeichnet, dass** die Verbindung (B1) im Gemisch mit der Verbindung (B2) vorliegt.

**8.** Klebstoffzusammensetzung nach Anspruch 7, **dadurch gekennzeichnet, dass** die Verbindung (B2) ein Derivat von Isophorondiisocyanat (IPDI) ist.

**9.** Klebstoffzusammensetzung nach einem der Ansprüche 7 oder 8, **dadurch gekennzeichnet, dass** die Zusammensetzung (B) ein Gemisch von Folgendem umfasst:

- dem Addukt (B1) von m-XDI und Trimethylolpropan (TMP) und
- IPDI-Isocyanurat als Verbindung (B2).

**10.** Klebstoffzusammensetzung nach einem der Ansprüche 7 bis 9, **dadurch gekennzeichnet, dass** der Gehalt an (B1) im Gemisch von (B1) und (B2) in einem Bereich von 40 % bis 80 % Gew./Gew. liegt.

**11.** Klebstoffzusammensetzung nach einem der Ansprüche 1 bis 10, **dadurch gekennzeichnet, dass** sie einen Haftvermittler umfasst, der in der -NCO Komponente oder in der -OH Komponente, vorzugsweise in der -OH Komponente, enthalten ist.

**12.** Klebstoffzusammensetzung nach Anspruch 11, **dadurch gekennzeichnet, dass** der Haftvermittler ein Aminosilan ist.

**13.** Klebstoffzusammensetzung nach einem der Ansprüche 1 bis 12, **dadurch gekennzeichnet, dass** die Mengen der -NCO und der -OH Komponente derart sind, dass das Verhältnis der Moläquivalente -NCO/-OH in einem Bereich von 3 bis 5 liegt.

**14.** Mehrschichtige Folie, umfassend 2 Materialdünnschichten, die miteinander durch eine durchgängige Schicht verbunden sind, **dadurch gekennzeichnet, dass** diese Schicht aus der Zweikomponentenklebstoffzusammensetzung nach einem der Ansprüche 1 bis 13 im vernetzten Zustand in einer Menge von weniger als 7 $g/m^2$ besteht.

**15.** Verfahren zur kontinuierlichen Herstellung der mehrschichtigen Folie nach Anspruch 14, umfassend die folgenden aufeinander folgenden Schritte:

(i) Vereinigen der -NCO und der -OH Komponente und gegebenenfalls Verdünnung mit einem Lösungsmittel zur Herstellung eines Klebstoffgemischs,
(ii) Beschichtung einer ersten Materialdünnschicht mit dem Klebstoffgemisch in Form einer im Wesentlichen durchgängigen Schicht,
(iii) Verdampfung des organischen Lösungsmittels,
(iv) Kaschieren einer zweiten Dünnschicht auf die gemäß Schritt (ii) beschichtete erste Dünnschicht und
(v) Vernetzung des Klebstoffgemischs.

**16.** Verwendung der mehrschichtigen Folie nach Anspruch 14 zur Herstellung flexibler Verpackungen.

## Claims

**1.** Solvent-based two-component polyurethane-type adhesive composition, comprising an -OH component and an -NCO component, such that:

- the -OH component is a composition (A) comprising an amorphous prepolymer which includes two -OH end groups, the number-average molar mass Mn of which ranges from 8000 to 12 000 g and which is chosen from:

  - a copolyester (A1) obtained by a polycondensation reaction:

    - of at least one aliphatic diol (i); with
    - at least one aromatic diacid (ii) chosen from terephthalic acid, isophthalic acid, phthalic acid and one of their diester or anhydride derivatives; and
    - at least one aliphatic diacid (iii) or one of its diester or anhydride derivatives; and
    - a polyurethane (A2) obtained by a polyaddition reaction between an aliphatic diisocyanate compound (A2.P1) and an amorphous copolyester diol (A2.P2), the number-average molecular weight Mn of which ranges from 4000 to 11 500 g/mol, said copolyester being obtained by the polycondensation reaction as defined above for (A1); and
    - the component -NCO is a composition (B) comprising a compound (B1) which includes three -NCO end groups, and which is obtained by the reaction of meta-xylylene diisocyanate (m-XDI) with a triol, said compound (B1) being:

      - either the only compound comprised in (B) including three -NCO end groups;
      - or else a mixture with another compound (B2) including three -NCO end groups, (B2) being an isocyanurate (B2-1) of an aliphatic diisocyanate and the content of (B1) in said mixture being at least 40% by weight, based on the total weight of said mixture.

**2.** Adhesive composition according to Claim 1, **characterized in that** the amorphous prepolymer included in the composition (A) is the amorphous copolyester diol (A1) and the diol (i) is chosen from ethylene glycol, diethylene glycol, trimethylene glycol, hexamethylene glycol, propylene glycol, propane-1,3-diol, (1,4-, 1,3- or 1,2-)butanediol, neopentyl glycol, 2-methyl-1,3-propanediol, hexanediol or also cyclohexanedimethanol.

**3.** Adhesive composition according to Claim 2, **characterized in that** the aliphatic diacid (iii) is chosen from adipic acid, azelaic acid, sebacic acid, cyclohexanedicarboxylic acid, dodecanedicarboxylic acid, 1,10-decanedicarboxylic acid and succinic acid.

**4.** Adhesive composition according to either of Claims 2 and 3, **characterized in that** the copolyester diol (A1) is obtained by polycondensation:

- of two aliphatic diols (i) consisting respectively of ethylene glycol and diethylene glycol; with
- two diacids (ii) consisting respectively of terephthalic acid and isophthalic acid; and
- adipic acid as aliphatic diacid (iii).

**5.** Adhesive composition according to Claim 1, **characterized in that** the compound (B1) is the only compound

comprised in the composition (B) including three -NCO end groups.

6. Adhesive composition according to either of Claims 1 and 5, **characterized in that** the compound (B1) is the adduct of m-XDI and of trimethylolpropane (TMP).

7. Adhesive composition according to Claim 1, **characterized in that** the compound (B1) is as a mixture with the compound (B2).

8. Adhesive composition according to Claim 7, **characterized in that** the compound (B2) is an isophorone diisocyanate (IPDI) derivative.

9. Adhesive composition according to either of Claims 7 and 8, **characterized in that** the composition (B) comprises a mixture of:

   - the adduct (B1) of m-XDI and of trimethylolpropane (TMP); and of
   - IPDI isocyanurate as compound (B2).

10. Adhesive composition according to one of Claims 7 to 9, **characterized in that** the content of (B1) in the mixture of (B1) and (B2) is within a range extending from 40% to 80% weight/weight.

11. Adhesive composition according to one of Claims 1 to 10, **characterized in that** it comprises an adhesion promoter included in the -NCO component or in the -OH component, preferably in the -OH component.

12. Adhesive composition according to Claim 11, **characterized in that** the adhesion promoter is an aminosilane.

13. Adhesive composition according to one of Claims 1 to 12, **characterized in that** the amounts of the -NCO and -OH components are such that the -NCO/-OH molar equivalent ratio is within a range extending from 3 to 5.

14. Multilayer film comprising two thin layers of material bonded together by a continuous layer, **characterized in that** said layer is constituted by the two-component adhesive composition as defined in one of Claims 1 to 13 in the crosslinked state, in a proportion of an amount of less than 7 $g/m^2$.

15. Process for the continuous preparation of the multilayer film as defined in Claim 14, comprising the sequential stages of:

   (i) combining the -NCO and -OH components and, if appropriate, diluting with a solvent, in order to form an adhesive mixture;
   (ii) coating, with said adhesive mixture, a first thin layer of material in the form of a substantially continuous layer;
   (iii) evaporating the organic solvent;
   (iv) laminating a second thin layer over the first thin layer coated in accordance with stage (ii), then
   (v) crosslinking the adhesive mixture.

16. Use of the multilayer film as defined in Claim 14, for the manufacture of flexible packagings.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 1283232 A
- EP 1985679 A1
- EP 3101044 A
- EP 0047452 A
- US 8097691 B


### Littérature non-brevet citée dans la description


- *CHEMICAL ABSTRACTS*, 107-21-1
- *CHEMICAL ABSTRACTS*, 42856-62-2
- *CHEMICAL ABSTRACTS*, 4457-71-0
- *CHEMICAL ABSTRACTS*, 2157-31-5
- *CHEMICAL ABSTRACTS*, 3121-82-2
- *CHEMICAL ABSTRACTS*, 53120-74-4
- *CHEMICAL ABSTRACTS*, 81554-20-3
- *CHEMICAL ABSTRACTS*, 126-30-7
- *CHEMICAL ABSTRACTS*, 115-76-4
- *CHEMICAL ABSTRACTS*, 78-26-2
- *CHEMICAL ABSTRACTS*, 115-84-4
- *CHEMICAL ABSTRACTS*, 2163-42-0
- *CHEMICAL ABSTRACTS*, 14690-00-7
- *CHEMICAL ABSTRACTS*, 31952-16-6
- *CHEMICAL ABSTRACTS*, 24765-57-9
- *CHEMICAL ABSTRACTS*, 15208-19-2
- *CHEMICAL ABSTRACTS*, 49623-11-2
- *CHEMICAL ABSTRACTS*, 80220-07-1
- *CHEMICAL ABSTRACTS*, 928-40-5
- *CHEMICAL ABSTRACTS*, 4089-71-8
- *CHEMICAL ABSTRACTS*, 82111-97-5
- *CHEMICAL ABSTRACTS*, 23433-04-7
- *CHEMICAL ABSTRACTS*, 1117-86-8
- *CHEMICAL ABSTRACTS*, 23433-05-8
- *CHEMICAL ABSTRACTS*, 27143-31-3
- *CHEMICAL ABSTRACTS*, 109359-36-6
- *CHEMICAL ABSTRACTS*, 75656-41-6
- *CHEMICAL ABSTRACTS*, 3207-95-2
- *CHEMICAL ABSTRACTS*, 76779-60-7
- *CHEMICAL ABSTRACTS*, 85018-58-2
- *CHEMICAL ABSTRACTS*, 42789-13-9
- *CHEMICAL ABSTRACTS*, 40326-00-9
- *CHEMICAL ABSTRACTS*, 13686-96-9
- *CHEMICAL ABSTRACTS*, 85018-64-0
- *CHEMICAL ABSTRACTS*, 85018-65-1
- *CHEMICAL ABSTRACTS*, 85018-63-9
- *CHEMICAL ABSTRACTS*, 35449-36-6
- *CHEMICAL ABSTRACTS*, 48074-20-0
- *CHEMICAL ABSTRACTS*, 128705-94-2
- *CHEMICAL ABSTRACTS*, 112548-49-9
- *CHEMICAL ABSTRACTS*, 109217-58-5
- *CHEMICAL ABSTRACTS*, 48074-21-1
- *CHEMICAL ABSTRACTS*, 85018-66-2
- *CHEMICAL ABSTRACTS*, 35449-37-7
- *CHEMICAL ABSTRACTS*, 13006-29-6
- *CHEMICAL ABSTRACTS*, 1119-87-5
- *CHEMICAL ABSTRACTS*, 33666-71-6
- *CHEMICAL ABSTRACTS*, 85018-68-4
- *CHEMICAL ABSTRACTS*, 85018-69-5
- *CHEMICAL ABSTRACTS*, 85018-70-8
- *CHEMICAL ABSTRACTS*, 5658-47-9
- *CHEMICAL ABSTRACTS*, 80158-99-2
- *CHEMICAL ABSTRACTS*, 62870-49-9
- *CHEMICAL ABSTRACTS*, 38146-95-1
- *CHEMICAL ABSTRACTS*, 39516-24-0
- *CHEMICAL ABSTRACTS*, 39516-27-3
- *CHEMICAL ABSTRACTS*, 22092-59-7
- *CHEMICAL ABSTRACTS*, 20999-41-1
- *CHEMICAL ABSTRACTS*, 91635-53-9